(19) Europäisches Patentamt
European Patent Office
Office européen des brevets

(11) Numéro de publication : **0 209 418 B1**

# FASCICULE DE BREVET EUROPEEN

(12)

(45) Date de publication du fascicule du brevet :
23.01.91 Bulletin 91/04

(21) Numéro de dépôt : 86401259.6

(22) Date de dépôt : 10.06.86

(51) Int. Cl.⁵ : **F25B 41/06,** B21D 28/28, F16L 41/00

(54) Procédé pour introduire un tube capillaire à un endroit quelconque d'un tube de diamètre supérieur et dispositif pour la mise en oeuvre de ce procédé.

(30) Priorité : 11.06.85 FR 8508805

(43) Date de publication de la demande :
21.01.87 Bulletin 87/04

(45) Mention de la délivrance du brevet :
23.01.91 Bulletin 91/04

(84) Etats contractants désignés :
DE FR IT SE

(56) Documents cités :
DE-B- 1 141 659
FR-A- 1 362 140
GB-A- 697 421
GB-A- 1 130 038
US-A- 1 773 522
US-A- 1 895 589
US-A- 1 962 543
US-A- 2 736 949
US-A- 2 847 835
US-A- 4 147 037

(73) Titulaire : **SOCIETE D'ELECTROMENAGER DU NORD SELNOR**
**Avenue des Sports**
**F-59810 Lesquin (FR)**

(72) Inventeur : **Demeester, Jean-Paul**
**THOMSON-CSF SCPI 19, avenue de Messine**
**F-75008 Paris (FR)**
Inventeur : **Beaumont, André**
**THOMSON-CSF SCPI 19, avenue de Messine**
**F-75008 Paris (FR)**
Inventeur : **Deroubaix, Didier**
**THOMSON-CSF SCPI 19, avenue de Messine**
**F-75008 Paris (FR)**

(74) Mandataire : **Grynwald, Albert et al**
**THOMSON-CSF SCPI**
**F-92045 PARIS LA DEFENSE CEDEX 67 (FR)**

## Description

L'invention est relative à un procédé pour introduire un tube capillaire à l'intérieur d'un tube de diamètre supérieur, afin de rendre leurs conduits coaxiaux ou les mettre en communication, et à un dispositif pour la mise en oeuvre de ce procédé.

Des tubes capillaires sont utilisés par exemple dans les systèmes d'échange thermique ou de production de froid pour permettre la détente d'un fluide frigorigène préalablement comprimé. Les extrémités de ces tubes sont habituellement mises en communication avec des tubes de diamètre supérieur.

Il existe des circuits simples dans lesquels cette mise en communication s'effectue en rentrant l'extrémité du tube capillaire dans l'extrémité du conduit du tube de diamètre supérieur et en effectuant un brasage pour les maintenir fixes l'un par rapport à l'autre.

Il existe des circuits plus complexes, possèdant des dérivations et dans lesquels on met parfois en communication un tube capillaire avec un endroit quelconque d'un tube de diamètre supérieur.

Les figures 1 à 3 montrent des solutions existantes de l'art antérieur qui permettent le raccord entre un capillaire et un tube de diamètre supérieur.

Les figures 1a et 1b montrent un type de raccord appelé raccord coudé. Le tube 11 de diamètre supérieur est coudé à l'endroit où doit se faire le raccord. Un trou 13 est percé à l'extérieur du coude de façon que le capillaire 12 puisse pénétrer à l'intérieur du tube 11. La fixation et l'étanchéité entre le capillaire et le tube sont ensuite réalisées par brasage.

Ce type de raccord présente des inconvénients : tout d'abord, il est encombrant, en raison de la présence du coude ; ensuite, le perçage entraîne parfois l'introduction de limaille à l'intérieur du circuit, qui risque de détériorer les organes mécaniques de compression ou de circulation du fluide, ou même de boucher le capillaire.

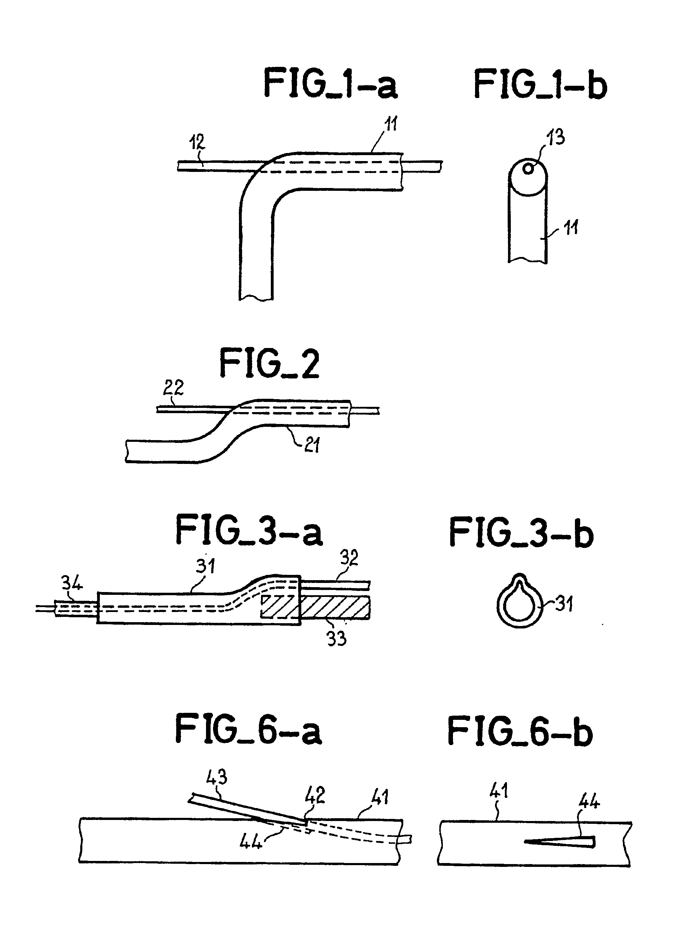

Afin de limiter l'encombrement, on a réalisé des raccords avec deux coudes sur le tube de diamètre supérieur. L'extérieur de l'un des coudes du tube 21 est percé comme le montre la figure 2. Le capillaire 22 est engagé dans le trou, ce qui donne à l'ensemble une forme générale de baïonnette.

L'encombrement reste malgré tout important, et les risques de présence de limaille dans le circuit ne sont pas diminués. De plus, la réalisation des deux coudes n'est pas particulièrement aisée à effectuer.

Afin de limiter l'encombrement, on a également réalisé des raccords droits. Pour cela, un perçage droit ou oblique est réalisé dans le tube de gros diamètre. Le capillaire est engagé dans ce trou après avoir été cambré pour déboucher dans le tube.

Cependant, la présence de limaille reste possible, et le cambrage du capillaire réduit encore plus son débit et risque même d'entraîner son obstruction.

Les figures 3a et 3b montrent une solution qui permet d'obtenir un encombrement limité et supprime le risque de présence de limaille dans le circuit.

Cette solution implique cependant l'utilisation d'une pièce supplémentaire difficile à réaliser. En effet, on utilise un tube 31 dit tube d'emmanchement.

L'une des extrémités de ce tube 31 est travaillée après avoir été chauffée de façon à ce que l'on puisse y entrer à la fois le capillaire 32 et le tube 33 de diamètre supérieur.

A l'autre extrémité, on introduit un tube 34 pour terminer le circuit.

La figure 3a montre ce mode de réalisation de profil et la figure 3b montre de face la forme de l'extrémité travaillée du tube 31 d'emmanchement.

La fixation entre les différents éléments est assurée par soudage ou brasage.

Cette solution est donc plus longue et plus coûteuse et augmente le nombre de brasures. De plus, l'emplacement exact de l'endroit où le capillaire doit être mis en communication doit être déterminé à l'avance, comme dans le cas où il faut réaliser un coude.

Des inconvénients ci-dessus sont retrouvés dans le US-A-2 847 835. Pour un raccord entre un capillaire et un tube de diamètre supérieur, on utilise également un tube d'emmanchement ou connecteur droit ou en coude, qui restreint la liberté d'introduction du capillaire à un endroit quelconque de ce tube. En outre, l'encombrement du raccord, qui est relativement grand, provient du fait que le capillaire est introduit dans le tube suivant une direction oblique à travers un trou incliné dont le plan incliné d'ouverture fait un angle inférieur à 90° avec l'axe de ce tube.

Un trou percé dans un tube peut être réalisé avec un dispositif de poinçonnage décrit dans le US-A-1 773 522. Cependant, ce dispositif comporte un poinçon dont la lame ayant un fil en courbe ne permet pas de réaliser dans un tube, une rampe d'accès rectiligne à un trou pourvu d'un plan d'ouverture perpendiculaire à l'axe de ce tube, cette rampe d'accès formant un canal semi-conique dans ce tube et facilitant une introduction d'un capillaire dans ce tube sans avoir besoin de cambrer ce capillaire.

Le procédé de l'invention ne présente pas ces inconvénients.

Selon l'invention, un procédé pour introduire un tube capillaire à l'intérieur d'un tube de diamètre supérieur est caractérisé par le fait qu'il comporte des étapes :

– d'emboutissage et cisaillement de la paroi du tube de façon à réaliser un trou et une rampe d'accès, le trou étant calibré au diamètre extérieur du capillaire et dont le plan d'ouverture est sensiblement perpendiculaire à l'axe principal du tube, par un déplacement d'un outil perpendiculaire à cet axe, le calibrage du trou étant obtenu par réglage de la course de l'outil ;

– d'introduction du capillaire dans le trou calibré, dans une direction sensiblement parallèle à l'axe principal.

Le procédé de l'invention présente donc des avantages par rapport à l'art antérieur : l'emboutissage ne nécessite aucune préparation du tube ; il peut être effectué directement sur une portion droite.

De plus, l'emboutissage n'entraîne aucun enlèvement de métal et il n'y a donc plus aucun risque que de la limaille ou des morceaux de métal soient introduits dans le circuit et viennent détériorer les éléments mécaniques de circulation du fluide.

Enfin, la forme du trou est telle que le capillaire peut être introduit directement, sans cambrage, à l'intérieur du tube. Le dispositif de l'invention comporte les caractéristiques de la revendication 5.

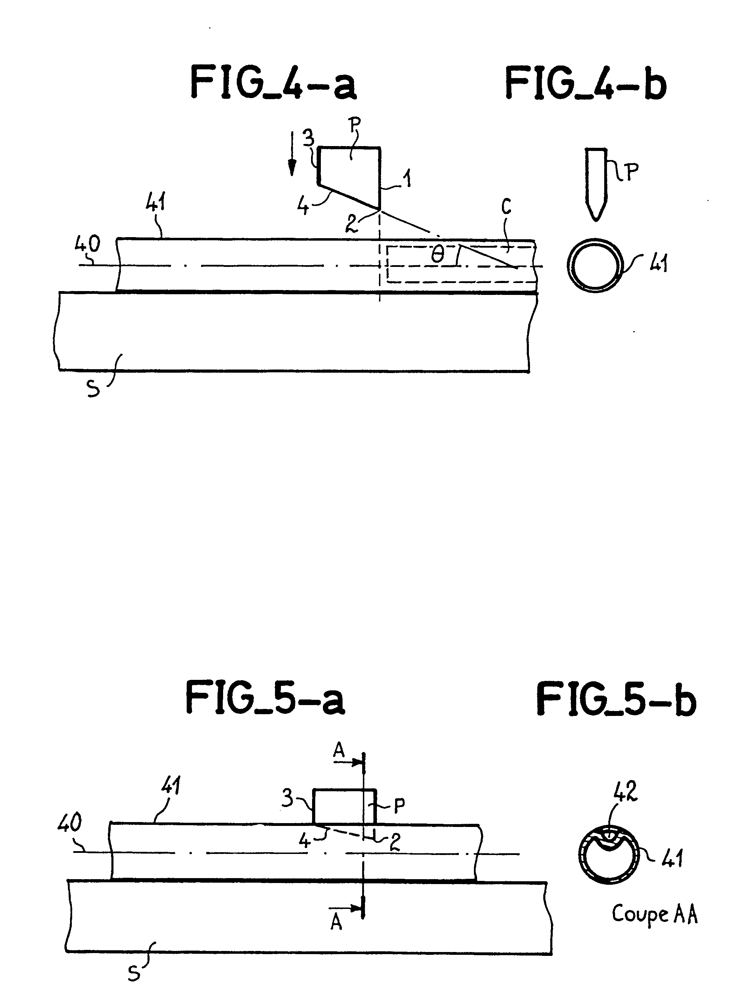

D'autre caractéristique et avantages du procédé de l'invention apparaîtront avec la description de quelques modes de mise en oeuvre effectuée en regard des figures 4 à 6 annexées.

Les figures 4a et 4b montrent le dispositif nécessaire pour obtenir par emboutissage un trou calibré.

Ce dispositif est constitué d'un poinçon P et d'un support S permettant le maintien du tube 41 lors de l'emboutissage. Le poinçon P peut être dirigé vers le tube 41 perpendiculairement à l'axe 40 principal du tube, comme le montre la flèche sur la figure 4a, par exemple grâce à un vérin.

Afin d'obtenir une rampe d'accès, le poinçon P est une lame ayant la forme représentée sur la figure 4a. L'axe principal 40 du tube 41 est placé parallèlement au plan de la lame. Le fil 4 de la lame, en regard avec le tube, possède une section arrondie comme le montre la figure 5b, et fait un angle θ avec l'axe principal 40 du tube, lequel angle θ détermine la pente de la rampe d'accès.

La lame possède également un bord 1 perpendiculaire à l'axe 40 du tube. Ce bord 1 engendre à son intersection avec le fil 4 une arête coupante 2 qui va être utilisée pour former le trou.

De préférence, l'autre bord 3 de la lame est perpendiculaire à l'axe du tube.

De préférence, une contre-partie C est introduite dans le tube, côté arête coupante 2 pour éviter l'écrasement du tube lorsque la lame descend.

Les figures 5a et 5b montrent le principe de réalisation du trou calibré. Cette contre partie C est une pièce cylindrique dont le diamètre extérieur correspond au diamètre intérieur du tube.

Le poinçon P est dirigé vers le tube, puis appliqué en force contre celui-ci. L'arête coupante 2 vient d'abord en contact et l'emboutissage commence à partir de cette partie. La contre partie C empêche alors la partie du tube qui ne doit pas être emboutie de se déformer, et forme, avec l'arête coupante 2 de la lame, une cisaille qui favorise la réalisation du trou de passage du capillaire sans perte de matière. Le poinçon déforme localement la paroi du tube et l'arête coupante 2 cisaille alors ladite paroi, perpendiculairement à l'axe principal, ce qui engendre le trou de passage du capillaire. Le calibrage de ce trou est obtenu en agissant sur la course du poinçon.

Dans une variante, non représentée, du dispositif de réalisation, le support S a la forme d'une gouttière qui enserre la paroi extérieure du tube, mais permet le passage du poinçon P. Pour celà, la gouttière possède une section cylindrique ou semi-cylindrique, dont le diamètre intérieur correspond au diamètre extérieur du tube. La contre partie C n'est alors plus nécessaire, car la forme du support empêche l'écrasement du tube lorsque le poinçon descend.

La figure 5b montre, en vue en coupe AA de la figure 5a, la déformation locale du tube 41 puis le cisaillage engendrant le trou de passage 42.

Sur la figure 6a, on présente l'allure de l'ensemble lorsque le capillaire 43 est en place. Sur cette figure, on distingue le tube 41, et la déformation due à l'emboutissage qui engendre le trou 42 de passage du capillaire 9 et la rampe 44 de guidage.

Cette rampe 44 de guidage, en raison de la forme de la lame, présente l'aspect d'un canal semi-cônique dont la base est à proximité du trou 42 de passage du capillaire, comme le montre de dessus la figure 6b.

Grâce à la figure 6a, on constate que le capillaire n'est absolument pas cambré et que, plus l'angle entre la rampe de guidage et l'axe du tube est faible, plus le capillaire est parallèle au tube 41.

La fixation définitive du capillaire au tube est effectuée, de préférence par brasage.

Lorsque le capillaire est en place, il est alors possible de modifier la forme du tube selon les besoins ou l'utilisation.

L'invention peut être appliquée tout particulièrement pour la réalisation des circuits frigorifiques des armoires de production de froid.

**Revendications**

1. Procédé pour introduire un tube capillaire (43) à l'intérieur d'un tube (41) de diamètre supérieur, caractérisé par le fait qu'il comporte des étapes :
   – d'emboutissage et cisaillement de la paroi du tube de façon à réaliser un trou (42) et une rampe d'accès (44), le trou (42) étant calibré au diamètre extérieur du capillaire et dont le plan d'ouverture est sensiblement perpendiculaire à l'axe (40) principal du tube, par un déplacement d'un outil (P) perpendiculaire à cet axe (40), le calibrage du trou (42) étant obtenu par réglage de la course de l'outil (P) ;
   – d'introduction du capillaire (43) dans le trou (42) calibré, dans une direction sensiblement parallèle à l'axe (40) principal.

2. Procédé selon la revendication 1, caractérisé en ce que la rampe (44) d'accès présente sensiblement la forme d'un canal semi-cônique dont la base est à l'ouverture du trou (42) calibré.

3. Procédé selon l'une quelconque des revendications précédentes, caractérisé en ce qu'après sa mise en place, le capillaire (43) est fixé au tube (41).

4. Procédé selon la revendication 3, caractérisé en ce que le capillaire (43) est fixé au tube (41) par brasage.

5. Dispositif pour la mise en oeuvre du procédé selon la revendication 1, caractérisé en ce qu'il comporte un poinçon (P) qui peut être guidé vers le tube (41), perpendiculairement à l'axe (40) principal du tube, la course du poinçon (P) étant contrôlée de façon à obtenir le calibrage du trou (42), et en ce que le poinçon (P) possède la forme d'une lame parallèle à l'axe (40) principal du tube (41) et dont le fil (4) fait un angle (θ) non nul déterminé par rapport à cet axe, et possède un bord (1) perpendiculaire à cet axe, engendrant à son intersection avec le fil une arête coupante (2).

6. Dispositif selon la revendication 5, caractérisé en ce que le fil (4) de la lame est de section arrondie.

7. Dispositif selon l'une quelconque des revendications 5 ou 6, caractérisé en ce qu'il comporte un support (S) de maintien du tube (41) lors de l'emboutissage.

8. Dispositif selon l'une quelconque des revendications 5 à 7, caractérisé en ce qu'il comporte une contre partie (C) destinée à être introduite dans le tube (41) pour empêcher son écrasement lorsque le poinçon est appliqué, et de façon à former une cisaille avec une arête coupante (2) de ce dernier.

9. Dispositif selon la revendication 8, caractérisé en ce que la contre partie (C) est une pièce cylindrique dont le diamètre extérieur correspond au diamètre intérieur du tube (41).

10. Dispositif selon la revendication 7, caractérisé en ce que le support (S) possède la forme d'une gouttière de section cylindrique, dont le diamètre intérieur correspond au diamètre extérieur du tube (41).

11. Dispositif selon la revendication 7, caractérisé en ce que le support (S) possède la forme d'une gouttière de section semi- cylindrique, dont le diamètre intérieur correspond au diamètre extérieur du tube (41).

**Claims**

1. A method for introducing a capillary tube (43) into the interior of a tube (41) with a larger diameter, characterized in that it comprises the following stages :
    – swaging and cutting of the wall of the tube in such a manner as to create a hole (42) and an access ramp (44), the hole (42) being size matched to the exterior diameter of the capillary and its opening plane being substantially perpendicular to the principal axis (40) of the tube, by shifting a tool (P) which is perpendicular to this axis (40), the desired size of the hole (42) being obtained by controlling the motion of the tool (P);
    – and introduction of the capillary (43) into the hole (42) made with the right size in a direction substantially parallel to the principal axis (40).

2. The method as claimed in claim 1, characterized in that the access ramp (44) substantially has the shape of a semi-conical channel whose base is at the opening of the hole (42) made with the desired size.

3. The method as claimed in any one of the preceding claims, characterized in that after being put in place, the capillary (43) is secured to the tube (41).

4. The method as claimed in claim 3, characterized in that the capillary (43) is secured to the tube (41) by brazing.

5. An apparatus for performing the method as claimed in claim 1, characterized in that it comprises a punch (P) which is able to be guided by towards the tube (41) perpendicularly to the principal axis (40) of the tube, the motion of the punch (P) being controlled in such a manner as to give the hole (42) the right size, and in that the punch (P) possesses the shape of a blade parallel to the principal axis (40) of the tube (41) and whose fine edge (4) makes an angle (θ) other than zero to this axis, and possesses an edge (1) perpendicular to this axis forming a cutting edge (2) at its intersection.

6. The apparatus as claimed in claim 5, characterized in that the fine edge (4) of the blade has a rounded section.

7. The apparatus as claimed in any one of the preceding claims 5 and 6, characterized in that it comprises a support (S) for holding the tube (41) during swaging.

8. The apparatus as claimed in any one of the preceding claims 5 through 7, characterized in that it comprises a counteracting part (C) adapted to be introduced into the tube (41) in order to prevent its collapsing when the punch is applied, and in such a manner as to form a cutting means with a cutting edge (2) of the latter.

9. The apparatus as claimed in claim 8, characterized in that the counteracting part (C) is a cylindrical member whose exterior diameter corresponds to the interior diameter of the tube (41).

10. The apparatus as claimed in claim 7, characterized in that the support (S) possesses the form of a channel with a cylindrical cross section, whose interior diameter is equal to the exterior diameter of the tube (41).

11. The apparatus as claimed in claim 7, characterized in that the support (S) possesses the form of a channel with a cylindrical cross section, whose interior diameter is equal to the exterior diameter of the tube (41).

## Ansprüche

1. Verfahren zum Einführen eines Kapillarrohres (43) in das Innere eines Rohres (41) mit größerem Durchmesser, dadurch gekennzeichnet, daß es die Schritte :

- des Austiefens und Ausschneidens der Rohrwand durch die Verschiebung eines Werkzeuges (P) senkrecht zur Hauptachse (40) des Rohres derart, daß ein Loch (42) und eine Zugangsrampe (44) ausgebildet werden, wobei das Loch (42) mit dem Außendurchmesser der Kapillare kalibriert wird und dessen Öffnungsebene im wesentlichen senkrecht zur Hauptachse (40) des Rohres orientiert ist ;
- des Einführens der Kapillare (43) in das kalibrierte Rohr (42) in einer zur Hauptachse (40) im wesentlichen parallelen Richtung umfaßt.

2. Verfahren gemäß Anspruch 1, dadurch gekennzeichnet, daß die Zugangsrampe (44) im wesentlichen die Form eines halbkonischen Kanals aufweist, dessen Basis die Öffnung des kalibrierten Lochs (42) ist.

3. Verfahren gemäß einem der vorangehenden Ansprüche, dadurch gekennzeichnet, daß die Kapillare (43) nach ihrem Einsetzen am Rohr (41) befestigt wird.

4. Verfahren gemäß Anspruch 3, dadurch gekennzeichnet, daß die Kapillare (43) durch Löten am Rohr (41) befestigt wird.

5. Vorrichtung zum Ausführen des Verfahrens gemäß Anspruch 1, dadurch gekennzeichnet, daß sie einen Dorn (P) enthält, der an das Rohr (41) senkrecht zur Hauptachse (40) des Rohrs herangeführt werden kann, wobei der Hub des Dorns (P) so gesteuert wird, daß die Kalibrierung des Lochs (42) erhalten wird, und daß der Dorn (P) die Form einer zur Hauptachse (40) des Rohrs (41) parallelen Klinge besitzt, deren Schneide (4) in bezug auf diese Achse einen von Null verschiedenen Winkel (θ) bildet und die eine zu dieser Achse senkrechte Kante (1) besitzt, die an ihrer Schnittlinie mit der Schneide eine Schneidkante (2) bildet.

6. Vorrichtung gemäß Anspruch 5, dadurch gekennzeichnet, daß die Schneide (4) der Klinge einen abgerundeten Querschnitt besitzt.

7. Vorrichtung gemäß einem der Ansprüche 5 oder 6, dadurch gekennzeichnet, daß sie eine Unterstützung (S) zum Halten des Rohrs (41) während der Austiefung enthält.

8. Vorrichtung gemäß einem der Ansprüche 5 bis 7, dadurch gekennzeichnet, daß sie ein Gegenstück (C) enthält, das dazu bestimmt ist, in das Rohr (41) eingeführt zu werden, um dessen Zusammendrückung bei Anwendung des Dorns zu verhindern, derart, daß mit der Schneidkante (2) des letzteren ein Schnitt ausgebildet wird.

9. Vorrichtung gemäß Anspruch 8, dadurch gekennzeichnet, daß das Gegenstück (C) ein zylindrisches Stück ist, dessen Außendurchmesser dem Innendurchmesser des Rohrs (41) entspricht.

10. Vorrichtung gemäß Anspruch 7, dadurch gekennzeichnet, daß die Unterstützung (S) die Form einer Rinne von zylindrischem Querschnitt besitzt, deren Innendurchmesser dem Außendurchmesser des Rohrs (41) entspricht.

11. Vorrichtung gemäß Anspruch 7, dadurch gekennzeichnet, daß die Unterstützung (S) die Form einer Rinne mit halbzylindrischem Querschnitt besitzt, deren Innendurchmesser dem Außendurchmesser des Rohrs (41) entspricht.

## FIG_1-a

12    11

## FIG_1-b

13

11

## FIG_2

22

21

## FIG_3-a

31    32

34

33

## FIG_3-b

31

## FIG_6-a

43    42    41

44

## FIG_6-b

41    44

# FIG_4-a

# FIG_4-b

# FIG_5-a

# FIG_5-b

Coupe AA